# EUROPÄISCHE PATENTANMELDUNG

(11) **EP 3 085 567 A2**
(43) Veröffentlichungstag der Anmeldung: **26.10.2016**
(21) Anmeldenummer: 16160155.4
(22) Anmeldetag: 14.03.2016
(51) Int. Cl.: B60K 17/28

(54) **NEBENABTRIEBSGETRIEBE UND LANDWIRTSCHAFTLICHE ARBEITSMASCHINE**

(30) Priorität: 20.04.2015 DE 102015207084; 29.06.2015 DE 102015212047
(71) Anmelder: ZF Friedrichshafen AG, 88046 Friedrichshafen (DE)
(72) Erfinder: Bauer, Christoph, 94575 Windorf (DE)

(57) **Zusammenfassung**

Die Erfindung betrifft ein Nebenabtriebsgetriebe (1) für ein Kraftfahrzeug, umfassend eine erste Antriebswelle (2) und eine Abtriebswelle (4), wobei auf der ersten Antriebswelle (4) eine Anzahl von ersten Antriebslosrädern (5, 6, 7, 8) angeordnet sind, wobei auf der Abtriebswelle (4) eine Anzahl von Abtriebslosrädern (11, 12, 13, 14) angeordnet sind und wobei jedes erste Antriebslosrad (5, 6, 7, 8) mit jeweils einem Abtriebslosrad (11, 12, 13, 14) in Eingriff steht. Das erfindungsgemäße Nebenabtriebsgetriebe (1) zeichnet sich dadurch aus, dass das Nebenabtriebsgetriebe (1) weiterhin eine zweite Antriebswelle (3) umfasst, auf welcher eine Anzahl von zweiten Antriebslosrädern (10, 18) und mindestens ein der Anzahl von zweiten Antriebslosrädern (10, 18) zugeordnetes Schaltelement (20) angeordnet sind, mittels dessen Betätigung jeweils ein einzelnes zweites Antriebslosrad (10, 18) mit der zweiten Antriebswelle (3) trieblich koppelbar oder von der zweiten Antriebswelle (3) trieblich trennbar ist, wobei jedes zweite Antriebslosrad (10, 18) mit jeweils einem Abtriebslosrad (11, 12, 13, 14) in Eingriff steht.

## Beschreibung

Die Erfindung betrifft ein Nebenabtriebsgetriebe gemäß dem Oberbegriff von Anspruch 1 sowie eine landwirtschaftliche Arbeitsmaschine.

Im Stand der Technik sind, insbesondere für landwirtschaftliche Arbeitsmaschinen, Zapfwellen bekannt, welche den Antrieb von an die Arbeitsmaschinen koppelbaren antreibbaren Arbeitsgeräten ermöglichen. Beispiele für derartige antreibbare Arbeitsgeräte sind etwa Mähwerke, Strohballenpressen oder Düngerstreuer. Weiterhin sind, ebenfalls für landwirtschaftliche Arbeitsmaschinen, Wegzapfwellen bekannt, welche den Antrieb von an die Arbeitsmaschinen koppelbaren antreibbaren Anhängern ermöglichen. Die Ausgangsdrehzahl sowohl der bekannten Zapfwellen als auch der bekannten Wegzapfwellen ist dabei üblicherweise von der Motordrehzahl der jeweiligen landwirtschaftlichen Arbeitsmaschine abhängig, wobei die Ausgangsdrehzahl der Wegzapfwellen zudem derart mit der Raddrehzahl der landwirtschaftlichen Arbeitsmaschine synchronisiert ist, dass ein an die Arbeitsmaschine gekoppelter antreibbarer Anhänger eine zur Arbeitsmaschine identische Vortriebsgeschwindigkeit erzeugt. Oftmals verfügen den Zapfwellen vorgeschaltete Getriebeeinheiten zudem über mehrere schaltbare Gangstufen, welche die Motordrehzahl der Arbeitsmaschine und die Ausgangsdrehzahl der Zapfwelle in ein einstellbares Verhältnis setzen.

In diesem Zusammenhang beschreibt die DE 10 2011 084 623 A1 ein Nebenabtriebsgetriebe in Form eines Zapfwellengetriebes, bei welchem eine Antriebswelle mit einer achsversetzt hierzu laufenden Abtriebswelle über eine von mehreren zwischenliegenden Übersetzungsstufen unter Definition je eines zugehörigen Übersetzungsverhältnisses gekoppelt werden kann. Die Übersetzungsstufen sind dabei jeweils einem von zwei Teilgetrieben zugeordnet, wobei jedes Teilgetriebe über eine Eingangswelle verfügt, welche über je ein Lastschaltelement drehfest mit der Antriebswelle gekoppelt werden kann. Zudem sind die Eingangswellen koaxial zueinander angeordnet und die Lastschaltelemente in einer Doppelkupplung zusammengefasst, so dass das Nebenabtriebsgetriebe insgesamt nach Art eines Doppelkupplungsgetriebe ausgestaltet ist. Ein Wechsel zwischen den einzelnen darstellbaren Übersetzungsverhältnissen kann dann unter Last vollzogen werden, indem bei Koppelung von Antriebswelle und Abtriebswelle über ein Übersetzungsverhältnis des einen Teilgetriebes in dem jeweils anderen Teilgetriebe ein benachbartes Übersetzungsverhältnis vorgewählt wird und der Wechsel dann durch Umschalten zwischen den Lastschaltelementen erfolgt.

Die DE 39 12 855 A1 offenbart einen Wegzapfenwellenantrieb über ein Zentraldifferential, welches hinter dem Fahrgetriebe die Motorkraft über eine erste Halbwelle auf das Fahrwerk, d.h. auf das Achsdifferential sowie ggf. auf weitere Verteilergetriebe zwischen den Antriebsachsen, und über eine weitere Halbwelle auf die Wegzapfwelle verteilt. Der Wegzapfenwellenantrieb der DE 39 12 855 A1 ermöglicht somit den Einsatz eines Triebachsanhängers, wobei unterschiedliche Abrollwege der Antriebsräder von Zugfahrzeug und Triebachse im Zentraldifferential ausgeglichen werden. Um auch einen starren Durchtrieb vom Fahrgetriebe zum Fahrantrieb und zur Wegzapfwelle zu ermöglichen, wird einerseits eine Differentialsperre im Zentraldifferential verwendet, andererseits ein Nachschaltgetriebe, welches zum Antrieb der Wegzapfwelle das Zentraldifferential umgeht.

Die bekannten Zapfwellenantriebe bzw. Wegzapfwellenantriebe sind jedoch insofern nachteilbehaftet, als dass diese entweder ausschließlich als Zapfwellenantrieb oder ausschließlich als Wegzapfwellenantrieb nutzbar sind. Um eine landwirtschaftliche Arbeitsmaschine sowohl mit einem Zapfwellenantrieb als auch mit einem Wegzapfwellenantrieb zu versehen, sind daher stets zwei voneinander unabhängige Nebenabtriebsgetriebe notwendig. Herstellungsseitig ist dies aufwändig und teuer.

Es ist eine Aufgabe der vorliegenden Erfindung, ein verbessertes Nebenabtriebsgetriebe vorzuschlagen.

Diese Aufgabe wird erfindungsgemäß durch das Nebenabtriebsgetriebe gemäß Anspruch 1 gelöst. Vorteilhafte Ausgestaltungen und Weiterbildungen der Erfindung gehen aus den abhängigen Ansprüchen hervor.

Die Erfindung betrifft ein Nebenabtriebsgetriebe für ein Kraftfahrzeug, umfassend eine erste Antriebswelle und eine Abtriebswelle, wobei auf der ersten Antriebswelle eine Anzahl von ersten Antriebslosrädern und mindestens ein der Anzahl von ersten Antriebslosrädern zugeordnetes Schaltelement angeordnet sind, wobei mittels einer Betätigung des der Anzahl von ersten Antriebslosrädern zugeordneten Schaltelements jeweils ein einzelnes erstes Antriebslosrad mit der ersten Antriebswelle trieblich koppelbar oder von der ersten Antriebswelle trieblich trennbar ist, wobei auf der Abtriebswelle eine Anzahl von Abtriebslosrädern und mindestens ein der Anzahl von Abtriebslosrädern zugeordnetes Schaltelement angeordnet sind, wobei mittels einer Betätigung des der Anzahl von Abtriebslosrädern zugeordneten Schaltelements jeweils ein einzelnes Abtriebslosrad mit der Abtriebswelle trieblich koppelbar oder von der Abtriebswelle trieblich trennbar ist und wobei jedes erste Antriebslosrad mit jeweils einem Abtriebslosrad in Eingriff steht. Das erfindungsgemäße Nebenabtriebsgetriebe zeichnet sich dadurch aus, dass das Nebenabtriebsgetriebe weiterhin eine zweite Antriebswelle umfasst, auf welcher eine Anzahl von zweiten Antriebslosrädern und mindestens ein der Anzahl von zweiten Antriebslosrädern zugeordnetes Schaltelement angeordnet sind, wobei mittels einer Betätigung des der Anzahl von zweiten Antriebslosrädern zugeordneten Schaltelements jeweils ein einzelnes zweites Antriebslosrad mit der zweiten Antriebswelle trieblich koppelbar oder von der zweiten Antriebswelle trieblich trennbar ist, wobei jedes zweite Antriebslosrad mit jeweils einem Abtriebslosrad in Eingriff steht.

Daraus ergibt sich der Vorteil, dass durch die die erste und die zweite Antriebswelle, welche voneinander unabhängig antreibbar sind, unterschiedliche Betriebsmodi der Abtriebswelle bzw. des Zapfwellenstummels realisierbar sind. Somit entfällt also die Notwendigkeit, ein zweites, gesondertes Nebenabtriebsgetriebe vorzuhalten, sofern mehr als nur ein einzelner Betriebsmodus der Abtriebswelle bzw. des Zapfwellenstummels gewünscht ist. Dies spart Herstellungskosten, Gewicht und Bauraum. Sofern die Anzahl der ersten bzw. zweiten Antriebslosräder größer als eins ist, sind zudem innerhalb jedes Betriebsmodus unterschiedliche Übersetzungsstufen darstellbar. Die unterschiedlichen Übersetzungsstufen können dabei durch entsprechende Betätigung der jeweils zugeordneten Schaltelemente gewählt werden. Die Schaltelemente ermöglichen über ihre Betätigung jeweils die triebliche Kopplung eines einzelnen ersten bzw. zweiten Antriebslosrads bzw. Abtriebslosrads mit der ersten bzw. zweiten Antriebswelle bzw. mit der Abtriebswelle oder eine triebliche Trennung der einzelnen ersten bzw. zweiten Antriebslosräder bzw. Abtriebslosräder mit der ersten bzw. zweiten Antriebswelle bzw. mit der Abtriebswelle, sodass in letzterem Fall jeweils ein ungekoppelter Neutralzustand entsteht.

Bevorzugt ist es vorgesehen, dass das der Anzahl von ersten Antriebslosrädern zugeordnete Schaltelement als nicht-lastschaltbare Hauptkupplung ausgebildet ist, welche bei einem Schaltvorgang die triebliche Verbindung von der ersten Antriebswelle zur Abtriebswelle zumindest kurzfristig vollständig unterbricht. Besonders bevorzugt sind in diesem Fall die ersten Antriebslosräder drehfest miteinander verbunden, z.B. über eine gemeinsame Nabe.

Alternativ bevorzugt ist das der Anzahl von ersten Antriebslosrädern zugeordnete Schaltelement als Lastschaltelement ausgebildet. Ein Lastschaltelement ermöglicht das Schalten von einer eingelegten Gangstufe in eine zu schaltende Gangstufe, wobei über ein sog. "Schleifen" eine Synchronisation der Drehzahlen der geschalteten Elemente erfolgen kann, wodurch dann ein im Wesentlichen ruckfreies Schalten gewährleistet werden kann. Somit ergibt sich also der Vorteil, dass während des Betriebs eines Anbaugeräts eine ruckfreie Anpassung der Drehzahl des Zapfwellenstummels und damit der Betriebsparameter des Anbaugeräts möglich wird, ohne notwendigerweise die Fahrgeschwindigkeit des Fahrzeugs im gleichen Maße verändern zu müssen.

Gemäß einer bevorzugten Ausführungsform der Erfindung ist es vorgesehen, dass die erste Antriebswelle trieblich derart mit einem Antriebsaggregat des Kraftfahrzeugs gekoppelt ist, dass eine Drehzahl der ersten Antriebswelle identisch zu einer Ausgangsdrehzahl des Antriebsaggregats ist und dass die zweite Antriebswelle trieblich derart mit einem Vorderradantrieb des Kraftfahrzeugs gekoppelt ist, dass eine Drehzahl der zweiten Antriebswelle identisch zu einer Ausgangsdrehzahl des Vorderradantriebs ist. Dies ermöglicht vorteilhaft die wechselweise Verwendung des Zapfwellenstummels als reine Zapfwelle zum Antrieb von Anbaugeräten, wie z.B. Mähwerken, Heuballenpressen und Pflanzmaschinen, oder auch als Wegzapfwelle zum Antrieb von antreibbaren Anhängern. Typischerweise wird dabei die Ausgangsdrehzahl des Antriebsaggregats, d.h. die erste Antriebswelle, in einem Betriebsmodus als Zapfwelle herangezogen und die Ausgangsdrehzahl des Vorderradantriebs, d.h. die zweite Antriebswelle, wird in einem Betriebsmodus als Wegzapfwelle herangezogen.

Unter dem Begriff "Ausgangsdrehzahl des Vorderradantriebs" wird erfindungsgemäß die Drehzahl der Abtriebswelle des Vorderradantriebs bzw. die Drehzahl der Vorderräder verstanden.

Bevorzugt ist es vorgesehen, dass die triebliche Kopplung der ersten Antriebswelle mit dem Antriebsaggregat ständig besteht, d.h., dass die erste Antriebswelle ständig angetrieben wird. Über das der Anzahl von ersten Antriebslosrädern zugeordnete Schaltelement ist es jedoch möglich, sämtliche ersten Antriebslosräder trieblich von der ersten Antriebswelle zu entkoppeln, so dass ein Lastfluss von der ersten Antriebswelle auf die Abtriebswelle dennoch unterbrochen ist. Ebenfalls ist es möglich, über das der Anzahl von Abtriebslosrädern zugeordnete Schaltelement sämtliche Abtriebslosräder von der Abtriebswelle trieblich zu trennen, sodass auch auf diesem Weg ein Lastfluss von der ersten Antriebswelle auf die Abtriebswelle unterbrochen werden kann.

Weiterhin ist es bevorzugt vorgesehen, dass die triebliche Kopplung der zweiten Antriebswelle mit dem Vorderradantrieb ebenfalls ständig besteht. Da der Vorderradantrieb jedoch oftmals zuschaltbar bzw. abschaltbar ist, kann somit über eine Abschaltung des Vorderradantriebs auch eine Abschaltung des Antriebs der zweiten Antriebswelle erfolgen. Darüber hinaus ist es über das der Anzahl von zweiten Antriebslosrädern zugeordnete Schaltelement auch möglich, sämtliche der zweiten Antriebslosräder trieblich von der zweiten Antriebswelle zu entkoppeln, so dass ein Lastfluss von der zweiten Antriebswelle auf die Abtriebswelle bei angetriebener zweiter Antriebswelle unterbrochen werden kann. Alternativ bzw. zusätzlich kann der Lastfluss von der zweiten Antriebswelle auf die Abtriebswelle auch in diesem Fall unterbrochen werden, indem sämtliche Abtriebslosräder von der Abtriebswelle trieblich getrennt werden.

Gemäß einer weiteren bevorzugten Ausführungsform der Erfindung ist es vorgesehen, dass mindestens ein erstes und mindestens ein zweites Antriebslosrad mit einem gemeinsamen Abtriebslosrad in Eingriff stehen, wobei ein Verhältnis eines Wälzkreisdurchmessers des mindestens einen ersten Antriebslosrads zu einem Wälzkreisdurchmesser des mindestens einen zweiten Antriebslosrads einem Verhältnis einer Drehzahl einer normierten Zapfwellenstufe zur Ausgangsdrehzahl des Vorderradantriebs entspricht und wobei ein Endstück der Abtriebswelle als Zapfwellenstummel ausgebildet ist. Da somit das genannte erste und das genannte zweite Antriebslosrad also mit einem gemeinsamen Abtriebslosrad kämmen, kann vorteilhafterweise ein zusätzliches Abtriebslosrad herstellungsseitig eingespart werden, welches andernfalls notwendig werden würde, damit das erste und das zweite Antriebslosrad mit jeweils einem gesonderten Abtriebslosrad kämmen könnten. Dies reduziert die Herstellungskosten, spart Bauraum und Gewicht. Indem weiterhin das Verhältnis des Wälzkreisdurchmessers des ersten Antriebslosrads zum Wälzkreisdurchmesser des zweiten Antriebslosrads einem Verhältnis einer Drehzahl einer normierten Zapfwellenstufe zur Ausgangsdrehzahl des Vorderradantriebs entspricht, ist außerdem gewährleistet, dass die Abtriebswelle bzw. der Zapfwellenstummel einerseits als reine Zapfwelle zum Antrieb von antreibbaren Anbaugeräten und andererseits als Wegzapfwelle zum Antrieb von antreibbaren Anhängern verwendet werde kann. In diesem Fall ist es nämlich notwendig, das benötigte Übersetzungsverhältnis zum Betrieb des Zapfwellenstummels als reine Zapfwelle sowie das benötigte Übersetzungsverhältnis zum Betrieb als Wegzapfwelle gleichzeitig am gemeinsamen Abtriebslosrad und dennoch unabhängig voneinander einstellen zu können.

Dem Fachmann sind dabei unterschiedliche normierte Zapfwellenstufen bekannt, welche jeweils eine bestimmte Drehzahl der Abtriebswelle bei einer bestimmten Motordrehzahl angeben. Über das Nebenabtriebsgetriebe ist die Drehzahl der Abtriebswelle und damit des Zapfwellenstummels aber natürlich trotzdem proportional zur Motordrehzahl und ändert sich entsprechend mit der Motordrehzahl nach Maßgabe einer Änderung der Motordrehzahl. Bekannte Zapfwellenstufen sind z.B. "540", "540E", "1000" oder "1000E". Es soll hier noch betont werden, dass es erfindungsgemäß ohne Bedeutung ist, welche genormte Zapfwellenstufe zur Bestimmung des notwendigen Wälzkreisdurchmessers herangezogen wird - jede bekannte oder zukünftige Norm ist gleichermaßen denkbar und geeignet. Das Zurückgreifen auf eine derartige genormte Zapfwellenstufe mit der entsprechend zugeordneten Drehzahl vereinfacht jedoch das Verwenden von in der Regel an derartige Normen angepassten antreibbaren Anbaugeräten bzw. antreibbaren Anhängern.

Gemäß einer weiteren bevorzugten Ausführungsform der Erfindung ist es vorgesehen, dass auf der ersten Antriebswelle ein Schaltelement zum Unterbrechen eines Lastflusses auf der ersten Antriebswelle angeordnet ist und ein Schaltelement zum Koppeln eines ersten Antriebslosrads mit der ersten Antriebswelle angeordnet ist. Dies erhöht die Flexibilität des erfindungsgemäßen Nebenabtriebsgetriebes und vermeidet gleichzeitig eine übermäßige Belastung des Schaltelements zum Koppeln eines ersten Antriebslosrads mit der ersten Antriebswelle, da der Schaltvorgang ruckfrei erfolgen kann.

Gemäß einer bevorzugten Ausführungsform der Erfindung ist es vorgesehen, dass die Schaltelemente jeweils als Schiebemuffe mit Muffenträger ausgebildet sind und/oder als elektrohydraulisch betätigbare Lamellenkupplung ausgebildet sind. Eine derartige Ausbildungsweise hat sich als gleichermaßen effektiv wie herstellungsseitig kostengünstig erwiesen. Die Ausbildungsform als elektrohydraulisch betätigbare Lamellenkupplung eignet sich dabei besonders für eine Ausführung eines Schaltelements als Lastschaltelement.

Gemäß einer weiteren bevorzugten Ausführungsform der Erfindung ist es vorgesehen, dass das Nebenabtriebsgetriebe derart ausgebildet ist, dass drei oder vier Drehmomentübertragungszweige von der ersten Antriebswelle auf die Abtriebswelle und ein oder zwei Drehmomentübertragungszweige von der zweiten Antriebswelle auf die Abtriebswelle darstellbar sind. Somit können also drei oder vier unterschiedliche Gangstufen für den Betrieb des Zapfwellenstummels als reine Zapfwelle und ein oder zwei Gangstufen für den Betrieb des Zapfwellenstummels als Wegzapfwelle dargestellt werden. Dies ermöglicht eine ausreichend große Flexibilität bei gleichzeitig noch vergleichsweise günstigen Herstellungskosten und geringem Bauraumbedarf ebenso wie ein vergleichsweise geringes Gewicht.

Gemäß einer weiteren bevorzugten Ausführungsform der Erfindung ist es vorgesehen, dass die erste Antriebswelle, die zweite Antriebswelle und die Abtriebswelle zueinander parallel angeordnet sind. Eine derartige Auslegung des erfindungsgemäßen Nebenabtriebsgetriebes hat sich als besonders einfach und damit vergleichsweise kostengünstig herstellbar erwiesen.

Besonders bevorzugt sind die erste Antriebswelle, die zweite Antriebswelle und die Abtriebswelle in einer gemeinsamen Ebene angeordnet. Je nach den spezifischen Bauraumbedingen des Kraftfahrzeugs, für welches das Nebenabtriebsgetriebe vorgesehen, können sich durch eine derartige Anordnung in einer gemeinsamen Ebene Vorteile ergeben.

Dies vereinfacht die Herstellung noch weiter und reduziert damit entsprechend auch die Herstellungskosten noch weiter.

Gemäß einer weiteren bevorzugten Ausführungsform der Erfindung ist es vorgesehen, dass auf der ersten Antriebswelle zwei erste Antriebslosräder angeordnet sind, dass auf der zweiten Antriebswelle zwei zweite Antriebslosräder angeordnet sind und dass auf der Abtriebswelle zwei Abtriebslosräder angeordnet sind. Diese Ausbildungsform ermöglicht bei Vorhandensein von nur jeweils zwei ersten und zwei zweiten Antriebslosrädern bzw. zwei Abtriebslosrädern die Darstellung von bis zu vier Drehmomentübertragungszweigen über die erste Antriebswelle und von bis zu zwei Drehmomentübertragungszweigen über die zweite Antriebswelle. Somit ist diese Ausbildungsform ganz besonders kostengünstig, leichtgewichtig, platzsparend und gleichzeitig flexibel. Da erfindungsgemäß jedes erste Antriebslosrad ebenso wie jedes zweite Antriebslosrad mit jeweils einem Abtriebslosrad in Eingriff steht, stehen gemäß der beschriebenen Ausbildungsform also jeweils eines der zwei ersten und eines der zwei zweiten Antriebslosräder mit einem gemeinsamen Abtriebslosrad in Eingriff. Das jeweils weitere erste und zweite Antriebslosrad stehen mit dem jeweils weiteren Abtriebslosrad in Eingriff.

Gemäß einer besonders bevorzugten Ausführungsform der Erfindung ist es vorgesehen, dass die zwei zweiten Antriebslosräder als Doppelstirnrad ausgebildet sind. Dies vereinfacht die Ausbildung von vier Drehmomentübertragungszweigen von der ersten Antriebswelle auf die Abtriebswelle, da zwei der vier Drehmomentübertragungszweige von der ersten Antriebswelle auf die Abtriebswelle über die zwei zweiten als Doppelstirnrad ausgebildeten Antriebslosräder geführt werden können, ohne dass zusätzliche Kopplungselemente zur Weiterführung des Lastflusses vorgesehen werden müssen, da die als Doppelstirnrad ausgebildeten zweiten Antriebslosräder naturgemäß drehfest miteinander verbunden sind. Dies wiederum reduziert die Kosten, das Gewicht und den benötigten Bauraum.

Gemäß einer weiteren bevorzugten Ausführungsform der Erfindung ist es vorgesehen, dass das den zwei zweiten Antriebslosrädern zugeordnete Schaltelement den zwei zweiten Antriebslosrädern trieblich vorgeschaltet ist und/oder dass das den zwei ersten Antriebslosrädern zugeordnete Schaltelement den zwei ersten Antriebslosrädern trieblich zwischengeschaltet ist und/oder dass das den zwei Abtriebslosrädern zugeordnete Schaltelement den zwei Abtriebslosrädern trieblich zwischengeschaltet ist. Dies hat sich im Betrieb des erfindungsgemäßen Nebenabtriebsgetriebes als besonders geeignet erwiesen.

Gemäß einer weiteren bevorzugten Ausführungsform der Erfindung ist es vorgesehen, dass das Nebenabtriebsgetriebe weiterhin Sperrstifte umfasst, mittels derer eine gleichzeitige Drehmomentübertragung von der ersten Antriebswelle auf die Abtriebswelle und von der zweiten Antriebswelle auf die Abtriebswelle blockierbar ist. Somit kann wirkungsvoll verhindert werden, dass durch einen Benutzerfehler bzw. eine ungeeignete Betätigung der verschiedenen Schaltelemente eine gleichzeitige Drehmomentübertragung von der ersten Antriebswelle auf die Abtriebswelle und von der zweiten Antriebswelle auf die Abtriebswelle darzustellen versucht wird. Dies könnte nämlich zu einer Beschädigung des Nebenabtriebsgetriebes führen.

Die Erfindung betrifft weiterhin eine landwirtschaftliche Arbeitsmaschine, umfassend ein erfindungsgemäßes Nebenabtriebsgetriebe. Die Verwendung des erfindungsgemäßen Nebenabtriebsgetriebes in der landwirtschaftlichen Arbeitsmaschine führt zu den bereits im Zusammenhang mit dem erfindungsgemäßen Nebenabtriebsgetriebe beschriebenen Vorteilen.

Nachfolgend wird die Erfindung anhand von in den Figuren dargestellten Ausführungsformen beispielhaft erläutert.

Es zeigen:
- Fig. 1: schematisch eine erste mögliche Ausbildungsform eines erfindungsgemäßen Nebenabtriebsgetriebes,
- Fig. 2: schematisch eine erste mögliche Ausbildungsform eines erfindungsgemäßen Nebenabtriebsgetriebes,
- Fig. 3: schematisch eine erste mögliche Ausbildungsform eines erfindungsgemäßen Nebenabtriebsgetriebes und
- Fig. 4: schematisch eine erste mögliche Ausbildungsform eines erfindungsgemäßen Nebenabtriebsgetriebes.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

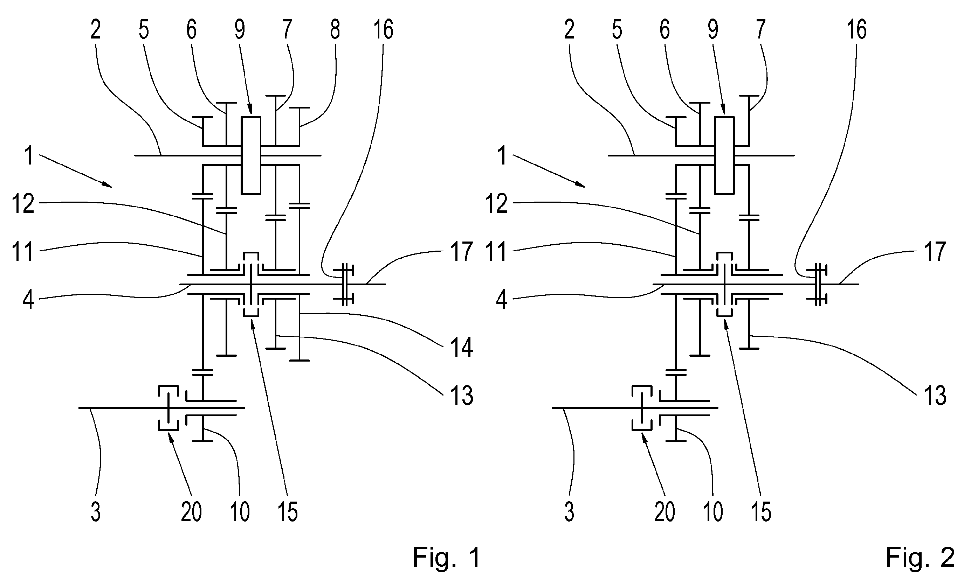

Fig. 1 zeigt schematisch eine erste mögliche Ausbildungsform eines erfindungsgemäßen Nebenabtriebsgetriebes 1, bestehend aus einer ersten Antriebswelle 2, einer zweiten Antriebswelle 3 und einer Abtriebswelle 4. Beispielsgemäß sind die erste Antriebswelle 2, die zweite Antriebswelle 3 und die Abtriebswelle 4 zueinander parallel und in einer Ebene angeordnet. Auf der ersten Antriebswelle 2 sind vier erste Antriebslosräder 5, 6, 7 und 8 angeordnet, wobei die ersten Antriebslosräder 5 und 6 bzw. 7 und 8 jeweils als gemeinsames Vierfachstirnrad ausgebildet sind, d.h. dass sie eine gemeinsame Nabe aufweisen. Weiterhin ist auf der ersten Antriebswelle 2 ein den ersten Antriebslosrädern 5, 6, 7 und 8 zugeordnetes, als Hauptkupplung ausgebildetes Schaltelement 9 angeordnet, mittels dessen Betätigung ein Lastfluss auf der ersten Antriebswelle 2 unterbrechbar ist. Über eine Betätigung des Schaltelements 9 ist es möglich, entweder die ersten Antriebslosräder 5, 6, 7 und 8 trieblich mit der ersten Antriebswelle 2 zu koppeln. Das Schaltelement 9 ermöglicht somit also die Darstellung von zwei unterschiedlichen Zuständen, nämlich eine Kopplung der ersten Antriebslosräder 5, 6, 7 und 8 mit der ersten Antriebswelle 2 und einen vollständig ungekoppelten Zustand, in welchem keines der ersten Antriebslosräder 5, 6, 7 und 8 mit der ersten Antriebsloswelle 2 gekoppelt sind.

Auf der zweiten Antriebswelle 3 ist ein einzelnes zweites Antriebslosrad 10 angeordnet, welches über ein als Schiebemuffe mit Muffenträger ausgebildetes Schaltelement 20 trieblich mit der zweiten Antriebswelle 3 koppelbar ist. Durch die Ausbildung des Schaltelements 20 als Schiebemuffe mit Muffenträger ist das Schaltelement 20 nicht lastschaltbar, d.h., dass die Drehzahl der zweiten Antriebswelle 3 zum Koppeln bzw. zum Entkoppeln des zweiten Antriebslosrads 10 mit der zweiten Antriebswelle 3 auf Null reduziert werden muss. Das Schaltelement 20 kann zwei unterschiedliche Zustände darstellen, nämlich eine Kopplung des zweiten Antriebslosrads 10 mit der zweiten Antriebswelle 3 sowie einen ungekoppelten Zustand, in welchem das zweite Antriebslosrad 11 freidrehend auf der zweiten Antriebswelle 3 angeordnet ist. Beispielsgemäß ist die erste Antriebswelle 2 trieblich derart mit einem (nicht dargestellten) Antriebsaggregat eines Kraftfahrzeugs gekoppelt ist, dass die Drehzahl der ersten Antriebswelle 2 identisch zu einer Ausgangsdrehzahl des Antriebsaggregats ist. Außerdem ist die erste Antriebswelle 2 gemäß dem dargestellten Ausführungsbeispiel permanent angetrieben, solange das Antriebsaggregat des Fahrzeugs in Betrieb ist. Bei dem Antriebsaggregat handelt es sich beispielsgemäß um einen Verbrennungsmotor und bei dem Fahrzeug handelt es sich beispielsgemäß um eine landwirtschaftliche Arbeitsmaschine. Die zweite Antriebswelle 3 ist beispielsgemäß trieblich derart mit einem (nicht dargestellten) Vorderradantrieb des Kraftfahrzeugs gekoppelt, dass eine Drehzahl der zweiten Antriebswelle 3 identisch zu einer Ausgangsdrehzahl des Vorderradantriebs ist. Der Vorderradantrieb ist beispielsgemäß bei Bedarf zuschaltbar und abschaltbar, sodass die landwirtschaftliche Arbeitsmaschine z.B. im Feldeinsatz den Vorderradanrieb zuschalten kann und diesen bei Transportfahrten auf asphaltiertem Untergrund abschalten kann.

Auf der Abtriebswelle 4 sind die Abtriebslosräder 11, 12, 13 und 14 angeordnet, welche über eine Betätigung von Schaltelement 15 jeweils mit der Abtriebswelle 4 trieblich koppelbar sind. Das Schaltelement 15 ist dabei als Schiebemuffe mit Muffenträger ausgebildet und entsprechend nicht lastschaltbar. D.h., dass die Drehzahl der Abtriebswelle 4 zum Schalten einer Gangstufe bzw. zum Koppeln bzw. zum Entkoppeln eines einzelnen der Abtriebslosräder 11, 12, 13 oder 14 mit der Abtriebswelle 4 bzw. von der Abtriebswelle 4 auf Null reduziert werden muss. Das Schaltelement 15 kann fünf unterschiedliche Zustände darstellen, nämlich jeweils eine Kopplung des Abtriebslosrads 11, 12, 13 bzw. 14 mit der Abtriebswelle 4 sowie einen ungekoppelten Zustand, in welchem alle vier Abtriebslosräder 11, 12, 13 und 14 freidrehend auf der Abtriebswelle 4 angeordnet sind. Weiterhin umfasst die Abtriebswelle 4 an einem Ende einen Zapfwellenstummel 16, an welchen eine Eingangswelle 17 eines antreibbaren Anbaugeräts oder eines antreibbaren Anhängers angeschlossen ist.

Wie weiterhin zu sehen ist, stehen das erste Antriebslosrad 5 und das zweite Antriebslosrad 10 mit dem Abtriebslosrad 11 gemeinsam in Eingriff. Ein Verhältnis eines Wälzkreisdurchmessers des ersten Antriebslosrads 5 zu einem Wälzkreisdurchmesser des zweiten Antriebslosrads 10 entspricht dabei einem Verhältnis einer Drehzahl einer normierten Zapfwellenstufe zur Ausgangsdrehzahl des Vorderradantriebs. Bei der normierten Zapfwellenstufe handelt es sich beispielsgemäß um die Stufe "540E". Durch diese Festlegung der Wälzkreisdurchmesser wird es erst ermöglicht, dass sowohl das erste Antriebslosrad 5 als auch das zweite Antriebslosrad 10 mit dem Abtriebslosrad 11 gleichzeitig in Eingriff stehen können. Bei einer anderen Auslegung der Wälzkreisdurchmesser wäre ein weiteres Abtriebslosrad notwendig, was das Nebenabtriebsgetriebe 1 jedoch teurer, schwerer und bauraumaufwändiger machen würde. Insgesamt können über das beispielhaft gezeigte Nebenabtriebsgetriebe 1 somit über die ersten Antriebslosräder 5, 6, 7 und 8 vier Drehmomentübertragungszweige von der ersten Antriebswelle 2 auf die Abtriebswelle 4 dargestellt werden und über das zweite Antriebslosrad 10 kann ein einzelner Drehmomentübertragungszweig von der zweiten Antriebswelle 3 auf die Abtriebswelle 4 dargestellt werden. Die vier möglichen Drehmomentübertragungszweige von der ersten Antriebswelle 2 auf die Abtriebswelle 4 stellen dabei jeweils genormte Zapfwellenstufen dar, nämlich die Stufen "540", "540E", "1000" und "1000E". Der Drehmomentüberragungszweig von der zweiten Antriebswelle 3 auf die Abtriebswelle 4 stellt eine genormte Wegzapfwellenstufe dar. Somit ermöglich das gezeigte Nebenabtriebsgetriebe 1 die wechselweise Verwendung des Zapfwellenstummels 16 als reine Zapfwelle oder als Wegzapfwelle, je nach geschaltetem Betriebsmodus.

Gemäß einem alternativ in der Fig. 1 dargestellten Ausführungsbeispiel handelt es sich bei dem Schaltelement 9 um ein Lastschaltelement 9. Über eine Betätigung des Lastschaltelements 9 ist es beispielsgemäß möglich, entweder die Antriebslosräder 5 und 6 oder die Antriebslosräder 7 und 8 trieblich mit der ersten Antriebswelle 2 zu koppeln, wobei die ersten Antriebslosräder 5 und 6 bzw. 7 und 8 in diesem Fall jeweils als Doppelstirnräder ausgebildet sind. Das Lastschaltelement 9 ermöglicht somit beispielsgemäß also die Darstellung von drei unterschiedlichen Zuständen, nämlich eine Kopplung der ersten Antriebslosräder 5 und 6 mit der ersten Antriebswelle 2, eine Kopplung der ersten Antriebslosräder 7 und 8 mit der ersten Antriebswelle 2 und einen ungekoppelten Zustand, in welchem weder die ersten Antriebslosräder 5 und 6 noch die ersten Antriebslosräder 7 und 8 mit der ersten Antriebsloswelle 2 gekoppelt sind. Beispielsgemäß ist das Lastschaltelement 9 als elektrohydraulisch betätigbare Lamellenkupplung ausgebildet. Das Heranziehen des Lastschaltelements 9 bietet gegenüber der Verwendung eines gewöhnlichen Schaltelements den Vorteil, dass ein Schalten unter Last möglich ist, d.h., dass die Drehzahl der ersten Antriebswelle 2 zum Schalten einer gewünschten Gangstufe bzw. zum Koppeln bzw. zum Entkoppeln eines der Antriebslosräder 5, 6, 7 oder 8 mit der ersten Antriebswelle 2 nicht auf Null reduziert werden muss.

Fig. 2 zeigt schematisch eine zweite mögliche Ausbildungsform eines erfindungsgemäßen Nebenabtriebsgetriebes 1. Das in Fig. 2 beispielhaft gezeigte Nebenabtriebsgetriebe 1 unterscheidet sich von dem in Fig. 1 gezeigten Nebenabtriebsgetriebe dadurch, dass auf der ersten Antriebswelle 2 nur drei erste Antriebslosräder 5, 6 und 7 angeordnet sind. Ebenso sind auf der Abtriebswelle 4 ebenfalls nur drei Abtriebslosräder 11, 12 und 13 angeordnet. Abgesehen von diesen konstruktiven Unterschieden ist das Nebenabtriebsgetriebe 1 der Fig. 2 identisch zu dem Nebenabtriebsgetriebe 1 der Fig. 1. Die genannten Unterschiede, d.h. das Fehlen eines vierten ersten Antriebslosrads und eines vierten Abtriebslosrads führen dazu, dass nur drei oder Drehmomentübertragungszweige von der ersten Antriebswelle 2 auf die Abtriebswelle 4 darstellbar sind. Entsprechend ist das Nebenabtriebsgetriebe der Fig. 2 vergleichsweise kostengünstiger, kompakter und leichtgewichtiger.

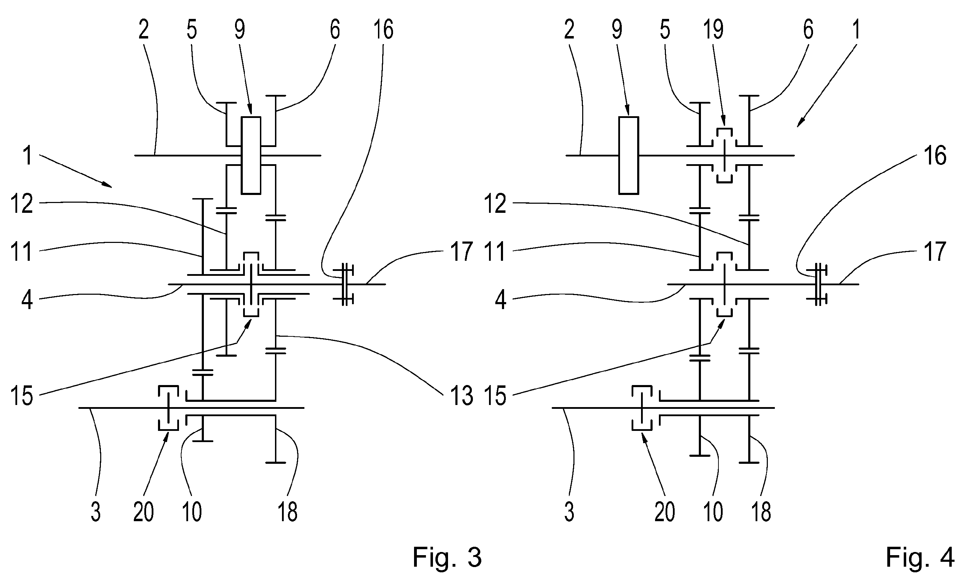

Fig. 3 zeigt schematisch eine dritte mögliche Ausbildungsform eines erfindungsgemäßen Nebenabtriebsgetriebes 1. Das Nebenabtriebsgetriebe 1 der Fig. 3 umfasst eine erste Antriebswelle 2, eine zweite Antriebswelle 3 und eine Abtriebswelle 4. Auf der ersten Antriebswelle 2 sind zwei erste Antriebslosräder 5 und 6 angeordnet, welche mittels einer Betätigung eines Schaltelements 9 jeweils mit der ersten Antriebswelle 2 trieblich koppelbar sind. Auf der zweiten Antriebswelle 3 sind zwei zweite Antriebslosräder 10 und 18 angeordnet, die als Doppelstirnrad ausgebildet sind. Durch die Ausbildung als Doppelstirnrad sind die zweiten Antriebslosräder 10 und 18 zwangsläufig drehfest miteinander verbunden. Ebenfalls auf der zweiten Antriebswelle 4 angeordnet ist ein Schaltelement 20, dessen Betätigung die als Doppelstirnrad ausgebildeten zweiten Antriebslosräder 10 und 18 mit der zweiten Antriebswelle 3 trieblich koppelt bzw. von der zweiten Antriebswelle 3 trieblich trennt. Auf der Abtriebswelle 4 sind drei Abtriebslosräder 11, 12 und 13 angeordnet, die mittels einer Betätigung von Schaltelement 15 jeweils mit der Abtriebswelle 4 koppelbar bzw. von dieser trennbar sind. Wie zu sehen ist, stehen das erste Antriebslosrad 6 sowie das zweite Antriebslosrad 18 gemeinsam mit dem Abtriebslosrad 13 in Eingriff. Ein Verhältnis eines Wälzkreisdurchmessers des ersten Antriebslosrads 6 zu einem Wälzkreisdurchmesser des zweiten Antriebslosrads 18 entspricht dabei einem Verhältnis einer Drehzahl einer normierten Zapfwellenstufe zur Ausgangsdrehzahl des Vorderradantriebs. Bei der normierten Zapfwellenstufe handelt es sich beispielsgemäß um die Stufe "1000". Durch diese Festlegung der Wälzkreisdurchmesser wird es ermöglicht, dass sowohl das erste Antriebslosrad 6 als auch das zweite Antriebslosrad 18 mit dem Abtriebslosrad 13 gleichzeitig in Eingriff stehen können, was wiederum die Notwendigkeit, ein zusätzliches Abtriebslosrad vorzuhalten, überflüssig macht.

Das in Fig. 3 gezeigte Nebenabtriebsgetriebe 1 ermöglicht die Darstellung von insgesamt drei Drehmomentübertragungszweigen von der ersten Antriebswelle 2 auf die Abtriebswelle 4 und von zwei Drehmomentübertragungszweigen von der zweiten Antriebswelle 3 auf die Abtriebswelle 4. Um die genannten drei Drehmomentübertragungszweigen von der ersten Antriebswelle 2 auf die Abtriebswelle 4 bei gleichzeitiger Anordnung von nur zwei ersten Antriebslosrädern 5 und 6 darstellen zu können, wird ein dritter Drehmomentübertragungszweig von der ersten Antriebswelle 2 über die zweite Antriebswelle 3 auf die Abtriebswelle 4 geführt. Die zwei anderen Drehmomentübertragungszweige von der ersten Antriebswelle 2 auf die Abtriebswelle 4 verlaufen direkt vom ersten Antriebslosrad 5 bzw. 6 auf das Abtriebslosrad 12 bzw. 13. Im Einzelnen verläuft der genannte dritte Drehmomentübertragungszweig von der ersten Antriebswelle 2 zunächst vom ersten Antriebslosrad 6, welches dazu über das Schaltelement 9 trieblich mit der ersten Antriebswelle 2 gekoppelt ist, auf das Abtriebslosrad 13. Das Abtriebslosrad 13 ist zur Darstellung des dritten Drehmomentübertragungszweig nicht mit der Abtriebswelle 4 gekoppelt sondern dreht frei auf der Abtriebswelle 4. Vom Abtriebslosrad 13 verläuft der dritte Drehmomentübertragungszweig weiter über das zweite Antriebslosrad 18, welches in diesem Fall trieblich nicht mit zweiten Antriebswelle 3 gekoppelt ist sondern auf dieser frei dreht. Da das zweite Antriebslosrad 18 und das zweite Antriebslosrad 10 als Doppelstirnrad ausgebildet sind, dreht das zweite Antriebslosrad 10 mit der gleichen Drehzahl wie das zweite Antriebslosrad 18 und ist ebenfalls nicht trieblich mit der zweiten Antriebswelle 3 gekoppelt. Entsprechend verläuft der dritte Drehmomentübertragungszweig vom zweiten Antriebslosrad 18 zum zweiten Antriebslosrad 10 und von diesem zum Abtriebslosrad 11. Das Abtriebslosrad 11 ist in diesem Fall über das Schaltelement 15 trieblich mit der Abtriebswelle 4 verbunden, so dass der Lastfluss über den bis hierher beschriebenen dritten Drehmomentübertragungszweig von der ersten Antriebswelle 2 auf die Abtriebswelle 4 übertragen werden kann.

Fig. 4 zeigt schematisch eine vierte mögliche Ausbildungsform eines erfindungsgemäßen Nebenabtriebsgetriebes 1, welches eine erste Antriebswelle 2, eine zweite Antriebswelle 3 und eine Abtriebswelle 4 umfasst. Auf der ersten Antriebswelle 2 sind zwei erste Antriebslosräder 5 und 6 angeordnet, die über ein Schaltelement 19, welches ebenfalls auf der ersten Antriebswelle 2 angeordnet ist, trieblich mit der ersten Antriebswelle 2 koppelbar sind bzw. von dieser trennbar sind. Das Schaltelement 19 kann beispielsgemäß drei unterschiedliche Zustände darstellen, nämlich eine trieblich Kopplung des ersten Antriebslosrads 5 mit der ersten Antriebswelle 2, eine triebliche Kopplung des ersten Antriebslosrads 6 mit der ersten Antriebswelle 2 und einen ungekoppelten Zustand. Ebenfalls auf der ersten Antriebswelle 2 ist Schaltelement 9 angeordnet, mittels dessen Betätigung ein Lastfluss auf der ersten Antriebswelle 2 unterbrochen werden kann, sodass der Lastfluss mittels des Schaltelements 19 vom ersten Antriebslosrad 5 auf das erste Antriebslosrad 6 oder umgekehrt umgeschaltet werden kann. Sobald eines der der beiden ersten Antriebslosräder 5 bzw. 6 mit der ersten Antriebswelle 2 trieblich gekoppelt wurde, kann über das Schaltelement 9 der Lastfluss wieder hergestellt werden.

Auf der zweiten Antriebswelle 3 sind zwei zweite Antriebslosräder 10 und 18 angeordnet, die als Doppelstirnrad ausgebildet sind. Durch die Ausbildung als Doppelstirnrad sind die zweiten Antriebslosräder 10 und 18 zwangsläufig drehfest miteinander verbunden. Ebenfalls auf der zweiten Antriebswelle 3 angeordnet ist ein Schaltelement 20, dessen Betätigung die als Doppelstirnrad ausgebildeten zweiten Antriebslosräder 10 und 18 mit der zweiten Antriebswelle 3 trieblich koppelt bzw. von der zweiten Antriebswelle 3 trieblich trennt.

Auf der Abtriebswelle 4 sind zwei Abtriebslosräder 11 und 12 angeordnet, die mittels einer Betätigung des Schaltelements 15 jeweils mit der Abtriebswelle 4 koppelbar sind. Wie zu sehen ist, stehen das erste Antriebslosrad 5 sowie das zweite Antriebslosrad 10 gemeinsam mit dem Abtriebslosrad 11 in Eingriff. Ein Verhältnis eines Wälzkreisdurchmessers des ersten Antriebslosrads 5 zu einem Wälzkreisdurchmesser des zweiten Antriebslosrads 10 entspricht dabei einem Verhältnis einer Drehzahl einer normierten Zapfwellenstufe zur Ausgangsdrehzahl des Vorderradantriebs. Bei der normierten Zapfwellenstufe handelt es sich beispielsgemäß um die Stufe "540". Wie weiterhin zu sehen ist, stehen das erste Antriebslosrad 6 sowie das zweite Antriebslosrad 18 gemeinsam mit dem Abtriebslosrad 12 in Eingriff. Ein Verhältnis eines Wälzkreisdurchmessers des ersten Antriebslosrads 6 zu einem Wälzkreisdurchmesser des zweiten Antriebslosrads 18 entspricht dabei ebenfalls einem Verhältnis einer Drehzahl einer normierten Zapfwellenstufe zur Ausgangsdrehzahl des Vorderradantriebs. Bei der normierten Zapfwellenstufe handelt es sich in diesem Fall beispielsgemäß um die Stufe "1000E". Durch diese Festlegung der Wälzkreisdurchmesser wird es ermöglicht, dass das erste Antriebslosrad 6 und das zweite Antriebslosrad 18 mit dem Abtriebslosrad 12 gleichzeitig in Eingriff stehen können, ebenso wie auch das erste Antriebslosrad 5 und das zweite Antriebslosrad 10 mit dem Abtriebslosrad 11 gleichzeitig in Eingriff stehen können. Es entfällt vorteilhaft die Notwendigkeit, zwei weitere Abtriebslosräder auf der Abtriebswelle 4 vorzuhalten.

Das in Fig. 4 gezeigte Nebenabtriebsgetriebe 1 ermöglicht die Darstellung von insgesamt vier Drehmomentübertragungszweigen von der ersten Antriebswelle 2 auf die Abtriebswelle 4 und von zwei Drehmomentübertragungszweigen von der zweiten Antriebswelle 3 auf die Abtriebswelle 4. Die letztgenannten zwei Drehmomentübertragungszweige von der zweiten Antriebswelle 3 auf die Abtriebswelle 4 werden dabei entweder über das zweite Antriebslosrad 10 in Verbindung mit dem Abtriebslosrad 11 gebildet oder über das das zweite Antriebslosrad 18 in Verbindung mit dem Abtriebslosrad 12, je nachdem, welches der Abtriebslosräder 11 und 12 über das Schaltelement 15 mit der Abtriebswelle 4 trieblich gekoppelt ist. In analoger Weise werden zwei der vier Drehmomentübertragungszweige von der ersten Antriebswelle 2 auf die Abtriebswelle 4 dargestellt, nämlich über das erste Antriebslosrad 5 in Verbindung mit dem Abtriebslosrad 11 oder über das das erste Antriebslosrad 6 in Verbindung mit dem Abtriebslosrad 12, je nachdem, welches der Abtriebslosräder 11 und 12 über das Schaltelement 15 mit der Abtriebswelle 4 trieblich gekoppelt ist bzw. welches der ersten Antriebslosräder 5 und 6 über das Schaltelement 19 mit der ersten Antriebswelle 2 trieblich gekoppelt ist.

Ein dritter Drehmomentübertragungszweig von der ersten Antriebswelle 2 auf die Abtriebswelle 4 verläuft über das erste Antriebslosrad 5, welches in diesem Fall mit der ersten Antriebswelle 2 trieblich gekoppelt ist, weiter über das Abtriebslosrad 11, welches in diesem Fall mit der Abtriebswelle 4 nicht trieblich gekoppelt ist sondern frei drehend auf dieser angeordnet ist, bis zum zweiten Antriebslosrad 10. Da das zweite Antriebslosrad 10 und das zweite Antriebslosrad 18 als Doppelstirnrad ausgebildet sind, wird die Drehbewegung des zweiten Antriebslosrads 10 auf das zweite Antriebslosrad 18 übertragen. Vom zweiten Antriebslosrad 18 verläuft der genannte Drehmomentübertragungszweig weiter auf das Abtriebslosrad 12, welches in diesem Fall trieblich mit der Abtriebswelle 4 gekoppelt ist und somit den Lastfluss auf die Abtriebswelle 4 führt.

Ein vierter Drehmomentübertragungszweig von der ersten Antriebswelle 2 auf die Abtriebswelle 4 verläuft über das erste Antriebslosrad 6, welches in diesem Fall mit der ersten Antriebswelle 2 trieblich gekoppelt ist, weiter über das Abtriebslosrad 12, welches in diesem Fall mit der Abtriebswelle 4 nicht trieblich gekoppelt ist sondern frei drehend auf dieser angeordnet ist, bis zum zweiten Antriebslosrad 18. Vom zweiten Antriebslosrad 18 wird der Lastfluss auf das zweite Antriebslosrad 10 übertragen. Vom zweiten Antriebslosrad 10 verläuft der vierte Drehmomentübertragungszweig weiter auf das Abtriebslosrad 11, welches in diesem Fall trieblich mit der Abtriebswelle 4 gekoppelt ist und somit den Lastfluss auf die Abtriebswelle 4 führt.

### Bezugszeichen

- 1: Nebenabtriebsgetriebe
- 2: erste Antriebswelle
- 3: zweite Antriebswelle
- 4: Abtriebswelle
- 5: erstes Antriebslosrad
- 6: erstes Antriebslosrad
- 7: erstes Antriebslosrad
- 8: erstes Antriebslosrad
- 9: Schaltelement, Lastschaltelement, Hauptkupplung
- 10: zweites Antriebslosrad
- 11: Abtriebslosrad
- 12: Abtriebslosrad
- 13: Abtriebslosrad
- 14: Abtriebslosrad
- 15: Schaltelement
- 16: Zapfwellenstummel
- 17: Eingangswelle
- 18: zweites Antriebslosrad
- 19: Schaltelement
- 20: Schaltelement

## Patentansprüche

1. Nebenabtriebsgetriebe (1) für ein Kraftfahrzeug, umfassend eine erste Antriebswelle (2) und eine Abtriebswelle (4), wobei auf der ersten Antriebswelle (4) eine Anzahl von ersten Antriebslosrädern (5, 6, 7, 8) und mindestens ein der Anzahl von ersten Antriebslosrädern (5, 6, 7, 8) zugeordnetes Schaltelement (9) angeordnet sind, wobei mittels einer Betätigung des der Anzahl von ersten Antriebslosrädern (5, 6, 7, 8) zugeordneten Schaltelements (9) jeweils ein einzelnes erstes Antriebslosrad (5, 6, 7, 8) mit der ersten Antriebswelle (2) trieblich koppelbar oder von der ersten Antriebswelle (2) trieblich trennbar ist, wobei auf der Abtriebswelle (4) eine Anzahl von Abtriebslosrädern (11, 12, 13, 14) und mindestens ein der Anzahl von Abtriebslosrädern (11, 12, 13, 14) zugeordnetes Schaltelement (15) angeordnet sind, wobei mittels einer Betätigung des der Anzahl von Abtriebslosrädern (11, 12, 13, 14) zugeordneten Schaltelements (15) jeweils ein einzelnes Abtriebslosrad (11, 12, 13, 14) mit der Abtriebswelle (4) trieblich koppelbar oder von der Abtriebswelle (4) trieblich trennbar ist und wobei jedes erste Antriebslosrad (5, 6, 7, 8) mit jeweils einem Abtriebslosrad (11, 12, 13, 14) in Eingriff steht,
**dadurch gekennzeichnet, dass** das Nebenabtriebsgetriebe (1) weiterhin eine zweite Antriebswelle (3) umfasst, auf welcher eine Anzahl von zweiten Antriebslosrädern (10, 18) und mindestens ein der Anzahl von zweiten Antriebslosrädern (10, 18) zugeordnetes Schaltelement (20) angeordnet sind, wobei mittels einer Betätigung des der Anzahl von zweiten Antriebslosrädern (10, 18) zugeordneten Schaltelements (20) jeweils ein einzelnes zweites Antriebslosrad (10, 18) mit der zweiten Antriebswelle (3) trieblich koppelbar oder von der zweiten Antriebswelle (3) trieblich trennbar ist, wobei jedes zweite Antriebslosrad (10, 18) mit jeweils einem Abtriebslosrad (11, 12, 13, 14) in Eingriff steht.

2. Nebenabtriebsgetriebe (1) nach Anspruch 1,
**dadurch gekennzeichnet, dass** die erste Antriebswelle (2) trieblich derart mit einem Antriebsaggregat des Kraftfahrzeugs gekoppelt ist, dass eine Drehzahl der ersten Antriebswelle (2) identisch zu einer Ausgangsdrehzahl des Antriebsaggregats ist und dass die zweite Antriebswelle (3) trieblich derart mit einem Vorderradantrieb des Kraftfahrzeugs gekoppelt ist, dass eine Drehzahl der zweiten Antriebswelle (3) identisch zu einer Ausgangsdrehzahl des Vorderradantriebs ist.

3. Nebenabtriebsgetriebe (1) nach mindestens einem der Ansprüche 1 und 2,
**dadurch gekennzeichnet, dass** mindestens ein erstes Antriebslosrad (5, 6, 7, 8) und mindestens ein zweites Antriebslosrad (11, 12, 13, 14) mit einem gemeinsamen Abtriebslosrad (11, 12, 13, 14) in Eingriff stehen, wobei ein Verhältnis eines Wälzkreisdurchmessers des mindestens einen ersten Antriebslosrads (5, 6, 7, 8) zu einem Wälzkreisdurchmesser des mindestens einen zweiten Antriebslosrads (11, 12, 13, 14) einem Verhältnis einer Drehzahl einer normierten Zapfwellenstufe zur Ausgangsdrehzahl des Vorderradantriebs entspricht und wobei ein Endstück der Abtriebswelle (4) als Zapfwellenstummel (16) ausgebildet ist.

4. Nebenabtriebsgetriebe (1) nach mindestens einem der Ansprüche 1 bis 3,
**dadurch gekennzeichnet, dass** auf der ersten Antriebswelle (2) ein Schaltelement (9) zum Unterbrechen eines Lastflusses auf der ersten Antriebswelle (2) angeordnet ist und ein Schaltelement (19) zum Koppeln eines ersten Antriebslosrads (5, 6, 7, 8) mit der ersten Antriebswelle (2) angeordnet ist.

5. Nebenabtriebsgetriebe (1) nach mindestens einem der Ansprüche 1 bis 4,
**dadurch gekennzeichnet, dass** die Schaltelemente (9, 15, 19, 20) jeweils als Schiebemuffe mit Muffenträger ausgebildet sind und/oder als elektrohydraulisch betätigbare Lamellenkupplung ausgebildet sind.

6. Nebenabtriebsgetriebe (1) nach mindestens einem der Ansprüche 1 bis 5,
**dadurch gekennzeichnet, dass** das Nebenabtriebsgetriebe (1) derart ausgebildet ist, dass drei oder vier Drehmomentübertragungszweige von der ersten Antriebswelle (2) auf die Abtriebswelle (4) und ein oder zwei Drehmomentübertragungszweige von der zweiten Antriebswelle (3) auf die Abtriebswelle (4) darstellbar sind.

7. Nebenabtriebsgetriebe (1) nach mindestens einem der Ansprüche 1 bis 6,
**dadurch gekennzeichnet, dass** die erste Antriebswelle (2), die zweite Antriebswelle (3) und die Abtriebswelle (4) zueinander parallel angeordnet sind.

8. Nebenabtriebsgetriebe (1) nach mindestens einem der Ansprüche 1 bis 7,
**dadurch gekennzeichnet, dass** auf der ersten Antriebswelle (2) zwei erste Antriebslosräder (5, 6, 7, 8) angeordnet sind, dass auf der zweiten Antriebswelle (3) zwei zweite Antriebslosräder (10, 18) angeordnet sind und dass auf der Abtriebswelle (4) zwei Abtriebslosräder (11, 12, 13, 14) angeordnet sind.

9. Nebenabtriebsgetriebe (1) nach Anspruch 8,
**dadurch gekennzeichnet, dass** die zwei zweiten Antriebslosräder (11, 12, 13, 14) als Doppelstirnrad ausgebildet sind.

10. Nebenabtriebsgetriebe (1) nach mindestens einem der Ansprüche 8 und 9,
**dadurch gekennzeichnet, dass** das den zwei zweiten Antriebslosrädern (11, 12, 13, 14) zugeordnete Schaltelement (20) den zwei zweiten Antriebslosrädern (11, 12, 13, 14) trieblich vorgeschaltet ist und/oder dass das den zwei ersten Antriebslosrädern (5, 6, 7, 8) zugeordnete Schaltelement (20) den zwei ersten Antriebslosrädern (5, 6, 7, 8) trieblich zwischengeschaltet ist und/oder dass das den zwei Abtriebslosrädern (11, 12, 13, 14) zugeordnete Schaltelement (20) den zwei Abtriebslosrädern (11, 12, 13, 14) trieblich zwischengeschaltet ist.

11. Nebenabtriebsgetriebe (1) nach mindestens einem der Ansprüche 8 bis 10,
**dadurch gekennzeichnet, dass** das Nebenabtriebsgetriebe (1) weiterhin Sperrstifte umfasst, mittels derer eine gleichzeitige Drehmomentübertragung von der ersten Antriebswelle (2) auf die Abtriebswelle (4) und von der zweiten Antriebswelle (3) auf die Abtriebswelle (4) blockierbar ist.

12. Landwirtschaftliche Arbeitsmaschine, umfassend ein Nebenabtriebsgetriebe (1) nach mindestens einem der Ansprüche 1 bis 11.
